(19) Europäisches Patentamt
European Patent Office
Office européen des brevets

(11) **EP 1 905 643 B1**

## (12) FASCICULE DE BREVET EUROPEEN

(45) Date de publication et mention
de la délivrance du brevet:
**13.03.2013 Bulletin 2013/11**

(51) Int Cl.:
**G01C 21/26** (2006.01)   **B60Q 1/08** (2006.01)
**B60Q 1/12** (2006.01)   **G01C 21/36** (2006.01)
**B60W 40/072** (2012.01)   **B60W 40/076** (2012.01)

(21) Numéro de dépôt: **07116259.8**

(22) Date de dépôt: **12.09.2007**

(54) **Procédé de détermination anticipée d'un virage sur une portion de route et système associé**

Verfahren zur Vorausbestimmung einer Kurve in einem Streckenabschnitt und zugehöriges System

Method of early detection of a bend on a portion of road and associated system

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **26.09.2006 FR 0608439**

(43) Date de publication de la demande:
**02.04.2008 Bulletin 2008/14**

(73) Titulaire: **VALEO VISION**
**93012 Bobigny Cedex (FR)**

(72) Inventeurs:
• **Bradai, Benazouz**
**93000, BOBIGNY (FR)**
• **Herbin, Anne**
**75011, PARIS (FR)**
• **Basset, Michel**
**68990, HEIMSBRUNN (FR)**
• **Lauffenburger, Jean-Philippe**
**68170, RIXHEIM (FR)**

(74) Mandataire: **Renous Chan, Véronique**
**Valeo Vision**
**Département Propriété Industrielle**
**34 Rue Saint-André**
**93012 Bobigny Cedex (FR)**

(56) Documents cités:
**DE-C1- 19 962 549    US-A- 6 141 617**
**US-A1- 2007 052 555**

• **POLYCHRONOPOULOS A ET AL: "Extended path prediction using camera and map data for lane keeping support" 13 septembre 2005 (2005-09-13), INTELLIGENT TRANSPORTATION SYSTEMS, 2005. PROCEEDINGS. 2005 IEEE VIENNA, AUSTRIA 13-16 SEPT. 2005, PISCATAWAY, NJ, USA,IEEE, PAGE(S) 602-607 , XP010843091 ISBN: 0780392159 * abrégé * * page 602, colonne de droite, ligne 14-17 * * page 603, colonne de gauche, ligne 23-47 * * page 605, colonne de gauche, ligne 22-40 * * page 607, colonne de gauche, dernier alinéa ***
• **KLOTZ A ET AL: "Lane data fusion for driver assistance systems" SEVENTH INTERNATIONAL CONFERENCE ON INFORMATION FUSION INT. SOC. OF INFORMATION FUSION MOUNTAIN VIEW, CA, USA, vol. 2, 2004, pages 657-663, XP009082998 Mountain View, CA, USA ISBN: 91-7056-116-8**

**Description**

La présente invention a pour objet un procédé de détermination anticipée d'un virage sur une portion de route empruntée par un véhicule automobile, et un système de mise en oeuvre de ce procédé. L'invention a essentiellement pour but de proposer une solution pour déterminer des caractéristiques d'un prochain virage qui sera emprunté par un véhicule automobile ; les caractéristiques ainsi déterminées sont alors exploitables dans différentes applications équipant le véhicule considéré. Notamment, mais de façon non limitative, on utilise les caractéristiques déterminées pour optimiser l'éclairage du virage considéré par le véhicule. Cette application est plus particulièrement décrite, à titre d'exemple, dans le présent document. Les caractéristiques déterminées par le procédé selon l'invention sont cependant exploitables dans d'autres applications qui seront détaillées par la suite.

Le domaine de l'invention est, d'une façon générale, celui des projecteurs de véhicule automobile. Dans ce domaine, on connaît différents types de projecteurs, parmi lesquels on trouve essentiellement:

- des feux de position, d'intensité et de portée faible;
- des feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule croisé;
- des feux de route longue portée, et des feux de complément de type longue portée, dont la zone de vision sur la route avoisine 200 mètres, et qui doivent être éteints lorsque l'on croise un autre véhicule afin de ne pas éblouir son conducteur;
- des projecteurs perfectionnés, dits bimodes, qui cumulent les 25 fonctions de feux de croisement et de feu de route en incorporant un cache amovible;
- des feux antibrouillard...

Les dispositifs projecteurs classiques qui viennent d'être évoqués, plus particulièrement ceux qui sont utilisés comme feux de croisement, produisent des faisceaux lumineux qui sont perfectibles lorsque ces dispositifs projecteurs sont utilisés dans certaines conditions. Ainsi, par exemple, lorsqu'un véhicule aborde un virage, les projecteurs continuent à éclairer droit devant eux alors qu'il serait plus judicieux d'orienter le faisceau lumineux dans la direction du virage emprunté. C'est pourquoi, en complément des fonctions projecteurs principales classiques, notamment codes et routes, différents perfectionnements sont progressivement apparus.

On a ainsi vu se développer des fonctions élaborées, dites fonctions AFS (Advanced Front lighting System en anglais pour système avancé d'éclairage frontal), parmi lesquelles on trouve notamment une fonction dite DBL (Dynamic Bending Light en anglais pour lumière virage mobile), qui réalise un dispositif projecteur orientable, appelé aussi dispositif projecteur à faisceau mobile : un tel dispositif projecteur est apte à modifier l'orientation d'un faisceau lumineux produit par une source lumineuse, de telle sorte que lorsque le véhicule aborde un virage, la route est éclairée de façon optimale, en suivant la géométrie de la route. (On comprend par « dispositif projecteur » le projecteur lui-même ou tout module optique monté mobile dans un projecteur fixe).

Pour réaliser une telle fonction, une première technique connue consiste à rendre mobile le faisceau principal du dispositif projecteur grâce à un moteur qui tourne en fonction d'une information provenant du véhicule, par exemple par l'intermédiaire d'un capteur d'angle volant. On parle alors de dispositif projecteur articulé. Une deuxième technique consiste en un dispositif projecteur lumineux fixe comportant une pluralité de sources lumineuses, par exemple de type diodes électroluminescentes, et des moyens pour commander un allumage successif dépendant de la trajectoire du véhicule desdites sources de façon à assurer un effet de balayage lumineux vers l'intérieur d'un virage abordé.

Avec de tels dispositifs projecteurs orientables, l'éclairage de la route n'est fonction que du comportement du conducteur. Par exemple, si le conducteur tourne le volant du véhicule vers la droite, alors les projecteurs du véhicule sont dirigés vers la droite de la route, en considérant qu'il s'agit d'un virage à droite. En outre, l'information relative au changement de direction n'est captée qu'au moment où le véhicule entre dans la courbe du virage, cette information étant le plus souvent donnée par le capteur d'angle volant détectant une variation de l'angle volant. Elle est donc fournie aux organes de contrôle du dispositif projecteur uniquement à partir du moment où le conducteur tourne le volant du véhicule, alors que le véhicule a déjà amorcé le virage. En conséquence, le dispositif présente un retard sur le déclenchement de l'éclairage en virage, ce qui se traduit, pour le conducteur, par une sensation d'arrivée tardive du faisceau lumineux en entrée du virage et par un retour trop long du faisceau lumineux dans l'axe du véhicule en sortie du virage. Ce retard dans le changement d'orientation des projecteurs entraîne, non seulement, un manque de confort pour le conducteur mais aussi un manque de sécurité puisqu'il existe, à chaque changement d'orientation des projecteurs, un instant pendant lequel la route est insuffisamment éclairée. Le manque d'anticipation dans la détection d'un virage à venir est donc préjudiciable pour assurer un éclairage optimal du virage considéré.

Pour remédier à ces problèmes de non anticipation, on a proposé, dans l'état de la technique, deux types de solutions.

Un premier type de solutions réside dans l'exploitation d'informations issues d'un système de navigation.

Un tel système de navigation associe des informations fournies par une cartographie avec des indications données par le GPS du véhicule. Il permet d'anticiper la géométrie de la route. Par exemple, il est possible de connaître à l'avance les virages qui vont apparaître sur la route à une distance donnée. Il est donc possible, en se fiant aux informations fournies par le système de navigation, de déterminer la distance séparant le virage du véhicule ainsi qu'un rayon de courbure d'un virage que le véhicule aborde, et d'orienter au moment opportun, de façon anticipée par rapport aux solutions précédentes qui ont été évoquées, des faisceaux lumineux du véhicule et ainsi d'optimiser l'éclairage du virage. De tels dispositifs sont décrits notamment dans les demandes de brevet EP 780 823, EP 887 229 et EP 1 415 856.

Cependant, un certain nombre de défauts inhérents à ce système en limitent la capacité d'anticipation :

- la cartographie actuelle est encore très imprécise. Il arrive très souvent qu'à un endroit donné, l'information soit absente. En effet, il existe des zones entières du monde qui ne sont pas couvertes par les bases de données par la cartographie ;
- il arrive aussi que l'information fournie par le système de navigation soit aberrante. Par exemple, si le conducteur a prévu de se rendre à un lieu A qu'il a mémorisé dans son système de navigation et si, finalement, en cours de route, il est amené à aller vers un lieu B sans suivre les indications données par le système de navigation, alors les informations données par ce système de navigation sont incohérentes, voir contradictoires, par rapport à la trajectoire réellement suivie par le véhicule ;
- une perte de couverture GPS est également possible, par exemple lors du passage sous un long tunnel ou dans une zone urbaine avec de grands immeubles.

Un deuxième type de solutions réside dans l'exploitation d'informations issues d'un système de traitement d'images. Un tel système fait intervenir au moins une caméra et des applications logicielles de traitement d'images. Un exemple d'un tel type de système consiste en un procédé de repérage des lignes blanches situées sur les routes. Cependant, il n'y a pas toujours des lignes blanches sur une route et ces lignes blanches, si elles existent, peuvent être effacées ou recouvertes par des dépôts quelconques, comme de la terre ; elles ne sont alors plus repérables par le procédé de repérage. Un autre exemple d'un tel système, décrit dans le document EP 1431918, consiste en un procédé de repérage des bordures des routes. Mais un tel procédé est déficient dans différents cas de figure, notamment lors de la présence d'intersection ou de bifurcation sur la route.

Le document intitulé "Extended path prediction using camera and map data for lane keeping support" de A. Polychronopoulos et al., XP010843091, décrit la détection anticipée d'un virage sur une portion de route empruntée par une automobile. Un premier système établit un premier ensemble d'informations sur le virage considéré par une corrélation de la position GPS de l'automobile avec les données d'une carte, et un deuxième système établit un deuxième ensemble d'informations sur le virage considéré par un traitement d'images prises par une caméra. A partir du premier et du deuxième ensemble d'informations, des moyens de traitement d'informations établissent un troisième ensemble d'informations sur le virage considéré.

Aucun des systèmes existant n'est donc entièrement satisfaisant pour la détection anticipée des caractéristiques d'un virage sur le point d'être emprunté par un véhicule automobile.

L'objet de l'invention propose une solution aux problèmes qui viennent d'être exposés. D'une façon générale, l'invention propose la combinaison des deux systèmes précédemment mentionnés, à savoir le système de navigation et le système associant caméra et applications de traitement d'images, en proposant de réaliser une fusion de ces deux sources d'informations anticipatives. L'invention propose ainsi notamment l'avantage de pouvoir proposer un mode de fonctionnement dégradé, utile en cas de défaillance d'un des deux systèmes, basé sur l'autre système, non défaillant ;un tel mode dégradé, qui est un mode de fonctionnement toujours anticipatif, n'est pas disponible dans l'état de la technique. L'invention permet donc d'obtenir un ensemble d'informations sur un virage sur le point d'être emprunté par un véhicule, lesdites informations résultant de la fusion des informations fournies par les deux systèmes distincts. Avantageusement, des indices de confiance sont attribués à chacun des deux systèmes, les indices de confiance intervenant alors dans la fusion des informations. Différentes applications sont directement concernées par l'invention : meilleure exploitation des dispositifs projecteurs orientables, avertissement du conducteur avant d'aborder un virage en lui indiquant une vitesse conseillée, optimisation d'un régulateur de vitesse adaptatif...

L'invention concerne donc essentiellement un procédé de détection anticipée d'un virage sur une portion de route empruntée par un véhicule automobile caractérisé en ce qu'il comporte les différentes étapes consistant à:

- établir, au moyen d'un premier système, dit système de navigation faisant intervenir une antenne GPS et des données de cartographie, un premier ensemble d'informations sur le virage considéré, le premier ensemble d'informations étant associé à un premier indice de confiance ;
- établir, au moyen d'un deuxième système, dit système de traitement d'images, faisant intervenir une caméra et des applications de traitement d'images, un deuxième ensemble d'informations sur le virage considéré, le deuxième ensemble d'informations étant associé à un deuxième indice de confiance ;

- établir, à partir du premier ensemble d'informations et du deuxième ensemble d'informations et en prenant en considération le premier indice de confiance et le deuxième indice de confiance, un troisième ensemble d'informations sur le virage considéré.

Outre les caractéristiques principales qui viennent d'être mentionnées dans le paragraphe précédent, le procédé selon l'invention peut présenter une ou plusieurs caractéristiques complémentaires parmi les suivantes :

- le premier ensemble d'informations est associé à un premier indice de confiance, et en ce que le deuxième ensemble d'informations est associé à un deuxième indice de confiance, l'étape consistant à établir le troisième ensemble d'informations sur le virage considéré étant réalisée en considérant le premier indice de confiance et le deuxième indice de confiance ;
- le troisième ensemble d'informations est associé à un troisième indice de confiance, élaboré à partir du premier indice de confiance et du deuxième indice de confiance ;
- le premier ensemble d'information et le deuxième ensemble d'informations comportent au moins une donnée parmi les suivantes : rayon de courbure du virage considéré, distance entre une position instantanée du véhicule et l'entrée du virage considéré, type de virage (virage vers la gauche, vers la droite, en S);
- le troisième ensemble d'informations comporte au moins une donnée parmi les suivantes : rayon de courbure du virage considéré, distance entre une position instantanée du véhicule et l'entrée du virage considéré, type de virage (virage vers la gauche, vers la droite, en S), point d'éclairage pertinent ;
- le premier indice de confiance est élaboré à partir d'au moins deux paramètres d'un premier ensemble de paramètres suivants: (il peut utiliser aussi un ou plusieurs autres paramètres ne figurant pas dans cette liste)

  - précision du positionnement GPS ;
  - précision de la numérisation de la cartographie;
  - date de mise à jour de la cartographie;
  - type de route;
  - niveau d'information sur la route;
  - classe fonctionnelle de la route;
  - environnement du véhicule;
  - sélection d'un mode guidage par le conducteur et niveau de conformité entre un itinéraire prévu et des informations fournies par des capteurs embarqués du véhicule;

- le premier indice de confiance est élaboré en réalisant une moyenne pondérée de valeurs affectées aux paramètres suivants, lesdits paramètres étant associés à des coefficients de pondération résultant d'une phase d'apprentissage :- précision du positionnement GPS ;- type de route ;- niveau d'information sur la route ;- classe fonctionnelle de la route ;- environnement du véhicule ;- sélection d'un mode guidage par le conducteur et niveau de conformité entre un itinéraire prévu et des informations fournies par des capteurs embarqués du véhicule;
- le deuxième indice de confiance est élaboré à partir d'au moins deux paramètres d'un deuxième ensemble de paramètres suivants, relatifs à une image obtenue par la caméra (il peut utiliser aussi un ou plusieurs autres paramètres ne figurant pas dans cette liste):

  - mesure de texture de l'image considérée ;
  - facteur d'ombre sur l'image considérée ;
  - gradient vertical de décroissance de la lumière;
  - indice de symétrie de l'image considérée;

- le deuxième indice de confiance est élaboré en réalisant une moyenne pondérée de valeurs affectées à l'ensemble des paramètres du deuxième ensemble de paramètres, lesdits paramètres étant associés à des coefficients de pondération résultant d'une phase d'apprentissage ;
- le procédé comporte avantageusement les étapes supplémentaires suivantes :

  - comparer le premier indice de confiance à une première valeur seuil et le deuxième indice de confiance à une deuxième valeur seuil, la première valeur seuil et la deuxième valeur seuil pouvant être égales ou différentes selon les applications ;
  - dans l'établissement du troisième ensemble d'informations, considérer uniquement le(s) ensemble(s) d'informations, parmi le premier ensemble d'informations et le deuxième ensemble d'informations, dont l'indice de confiance est supérieur à la valeur seuil à laquelle il est comparé ;

- le procédé comporte l'étape supplémentaire consistant à, dans le cas où le premier indice de confiance et le deuxième indice de confiance sont inférieurs aux valeurs seuils auxquelles ils sont comparés, adopter un mode de fonctionnement dégradé dans lequel la détection du virage considéré est instantané ;
- le troisième ensemble d'informations est constitué notamment de données, la valeur de chacune desdites données étant établie en réalisant une moyenne pondérée de données correspondantes du premier ensemble d'informations et du deuxième ensemble d'informations, une donnée du premier ensemble étant pondérée par un premier coefficient de pondération et la donnée correspondante du deuxième ensemble étant pondérée par un deuxième coefficient de pondération, le premier coefficient de pondération étant supérieur au deuxième coefficient de pondération si et seulement si le premier indice de confiance est supérieur au deuxième indice de confiance.

Alternativement, on peut substituer à cette méthode logique simple de pondération un système de fusion de données, par exemple selon l'une des méthodes suivantes : bayésienne, théorie ensembliste par logique floue, théorie de l'évidence de Dempster-Shafer.

- le deuxième système met en oeuvre notamment l'opération consistant à repérer des bordures de la portion de route considérée ;
- le deuxième système met en oeuvre notamment l'opération consistant à repérer des lignes blanches sur la portion de route considérée ;

La présente invention se rapporte également à un système de détection anticipée d'un virage sur une portion de route mettant en oeuvre le procédé selon l'invention avec ses caractéristiques principales, et éventuellement une ou plusieurs caractéristiques complémentaires, caractérisé en ce qu'il comporte :

- un premier système, dit système de navigation, faisant intervenir une antenne GPS, et des données de cartographie pour établir un premier ensemble d'informations sur le virage considéré associé à un premier indice de confiance ;
- un deuxième système, dit système de traitement d'images, faisant intervenir une caméra et des applications de traitement d'images pour établir un deuxième ensemble d'informations sur le virage considéré associé à un deuxième indice de confiance;
- des moyens de traitement d'informations pour établir, à partir du premier ensemble d'informations et du deuxième ensemble d'informations et en prenant en considération le premier indice de confiance et le deuxième indice de confiance, un troisième ensemble d'informations sur le virage considéré.

Outre les caractéristiques principales qui viennent d'être mentionnées dans le paragraphe précédent, le système selon l'invention peut présenter une ou plusieurs caractéristiques complémentaires parmi les suivantes :

- le premier ensemble d'informations, le deuxième ensemble d'informations et le troisième ensemble d'informations comportent notamment une donnée relative au rayon de courbure du virage considéré, ledit système étant relié à un dispositif projecteur à faisceau mobile;
- le dispositif projecteur à faisceau mobile est un dispositif projecteur orientable ;
- le dispositif projecteur à faisceau mobile est un dispositif projecteur fixe comportant une pluralité de sources lumineuses présentant un allumage successif dépendant de la trajectoire du véhicule ;
- le premier ensemble d'informations, le deuxième ensemble d'informations et le troisième ensemble d'informations comportent notamment une donnée relative au rayon de courbure du virage considéré, ledit système étant relié à un système de régulateur de vitesse adaptatif utilisant notamment la donnée relative au rayon de courbure comme paramètre de fonctionnement;
- le premier ensemble d'informations, le deuxième ensemble d'informations et le troisième ensemble d'informations comportent notamment une donnée relative au rayon de courbure du virage considéré, ledit système étant relié à un système de limitation de vitesse pour limiter la vitesse du véhicule à une valeur limite fonction notamment du rayon de courbure du virage considéré.

Enfin, la présente invention se rapporte à tout véhicule automobile équipé du système de détection anticipée d'un virage sur une portion de route selon l'invention, avec ses caractéristiques principales et éventuellement une ou plusieurs caractéristiques complémentaires.

Le système de positionnement géographique peut être par exemple un système comprenant un réseau de satellites permettant le positionnement géodésique de récepteurs avec lesquels ils communiquent, tel que par exemple le réseau GPS. Dans le cas d'un réseau GPS, le récepteur de données est un récepteur ou antenne GPS.

L'invention et ses différentes applications seront mieux comprises à la lecture de la description qui suit et à l'examen des figures qui l'accompagnent.

Celles-ci ne sont présentées qu'à titre indicatif et nullement limitatif de l'invention. Les figures montrent :

- à la figure 1, une représentation du principe de l'invention, illustrant la combinaison des systèmes embarqués dans le véhicule;
- à la figure 2, une représentation schématique d'une première application du procédé selon l'invention;
- à la figure 3, une représentation schématique d'une deuxième application du procédé selon l'invention.

Les différents éléments apparaissant sur plusieurs figures auront gardé, sauf précision contraire, la même référence.

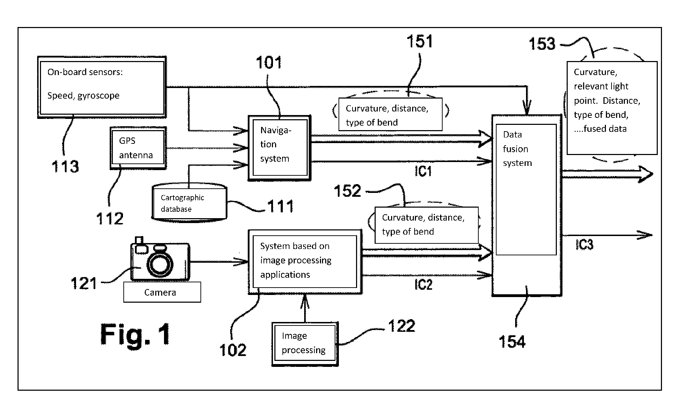

Sur la figure 1, on a représenté, de façon schématique, les différents éléments intervenant dans un exemple de mise en oeuvre du procédé selon l'invention au sein d'un véhicule automobile, permettant d'obtenir un ensemble d'informations final 153 relatives à un virage sur le point d'être abordé par ledit véhicule. De manière essentielle, le véhicule considéré embarque un premier système 101 de détection anticipée de virage, dit système de navigation, faisant notamment intervenir des données de cartographie 111 et une antenne GPS 112 placée sur le véhicule et apte à recevoir des informations de localisation précises. Dans l'exemple considéré, le premier système 101 fait également intervenir des capteurs embarqués 113 du véhicule considéré, du type capteur de vitesse, gyroscope, capteur d'angle volant.... Ces différents capteurs sont aptes à délivrer différentes informations permettant de vérifier la cohérence entre le parcours effectivement suivi par le véhicule, et le parcours prévu par le système de navigation. Le système de navigation 101 permet d'obtenir un premier ensemble d'informations 151 sur le prochain virage qui sera emprunté par le véhicule. Notamment, le premier ensemble d'informations comporte des données sur le rayon de courbure, la distance à laquelle se trouve ledit virage par rapport à la position instantanée du véhicule, le type de virage - virage à gauche ou virage à droite...

Le véhicule embarque par ailleurs un deuxième système 102 de détection anticipée de virages, dit système de traitement d'images, faisant intervenir une caméra 121 capturant des images de la route sur le point d'être empruntée par le véhicule, et un ensemble d'applications 122 de traitement d'images dont les algorithmes permettent, soit, par exemple, par repérage des lignes blanches ou par analyse des bordures de la route, de produire un deuxième ensemble d'informations 152 sur le prochain virage qui sera emprunté par le véhicule. Notamment, le deuxième ensemble d'informations comporte des données sur le rayon de courbure, la distance à laquelle se trouve ledit virage par rapport à la position instantanée du véhicule, le type de virage (gauche, droite)...

Selon l'invention, à partir du premier ensemble d'informations 151 et du deuxième ensemble d'informations 152, l'ensemble d'informations final 153 est élaboré. A cet effet, des moyens de traitement d'informations interviennent, avec notamment un microprocesseur et des applications logicielles spécifiques, dans un système de fusion de données 154. Dans un premier exemple, basique, l'ensemble d'informations final 153 comporte, pour chaque donnée présente dans le premier ensemble d'informations 151 et dans le deuxième ensemble d'informations 152, une donnée adoptant pour valeur la moyenne des valeurs des deux données correspondantes dans le premier et le deuxième ensemble d'informations. A partir des données finales obtenues dans l'ensemble d'informations finales, et en tenant compte des informations 113 venant des capteurs embarqués, de nouvelles informations, du type position d'un point d'éclairage pertinent, sont obtenues.

Dans un autre mode de mise en oeuvre, plus élaboré, on propose d'associer le premier ensemble d'informations 151 et le deuxième ensemble d'informations 152 respectivement à un premier indice de confiance IC1 et à un deuxième indice de confiance IC2 pour réaliser une fusion des deux systèmes (à base de caméra et à base de navigation). Ces indices de confiance sont calculés à partir d'une pluralité de critères, référencés $C_i$, désignés également comme paramètres. Pour la fusion des deux systèmes, une phase de modélisation et d'estimation des connaissances permet de calculer l'indice de confiance des deux systèmes en se basant sur les différents critères définis. Ainsi, dans un exemple de calcul du premier indice de confiance, on adopte l'équation suivante :

$$IC1 = (\alpha_1 \times C_1 + \alpha_2 \times C_2 + \alpha_3 \times C_3 + \alpha_4 \times C_4 + \alpha_5 \times C_5 + \alpha_6 \times C_6)/(\alpha_1 + \alpha_2 + \alpha_3 + \alpha_4 + \alpha_5 + \alpha_6),$$

avec:

$C_1$ : Type de route ;

$C_2$ : Niveau d'information sur la route (donné par la classification ADAS) ; $C_3$ : Classe fonctionnelle de la route : FC1 ou FC2 ;

$C_4$ : Environnement (Ville, Sortie d'autoroute, Intersection, ...) ;

$C_5$ : Indice de confiance du positionnement GPS ;

$C_6$ : Mode guidage sélectionné ou pas par le conducteur ;

et où $\alpha_1$, $\alpha_2$, $\alpha_3$, $\alpha_4$, $\alpha_5$, $\alpha_6$ sont des coefficients de pondération, appelés indices de confiance intermédiaires, assignés aux différents critères en fonction de la fiabilité de leurs informations. Ces poids sont généralement définis par expérience ou par apprentissage.

| Critères | Valeur | Indice de confiance intermédiaire |
|---|---|---|
| **Critère 1:** Type de route | Type de route = Européenne | 0,9 |
| | Type de route = Autoroute | 0,9 |
| | Type de route = Nationale | 0,8 |
| | Type de route = Départementale | 0,7 |
| | Type de route = Communale | 0,5 |
| **Critère 2 :** Niveau d'information sur la route : Attribut ADAS | Validé | 0,9 |
| | Non validé | 0,5 |
| **Critère 3 :** Classe fonctionnelle de la route FC1 ou FC2 | Validé | 0,9 |
| | Non validé | 0,5 |
| **Critère 4 :** Environnement | Ville | 0,7 |
| | Intersection | 0,5 |
| | Sortie d'autoroute | 0,5 |
| **Critère 5 :** Indice de confiance du positionnement (GPS) | | Valeur donnée par le système de navigation |
| **Critère 6 :** Mode guidage sélectionné ou pas par le conducteur | Selectioné | 0,9 |
| | Non sélectionné | 0,5 |

Le tableau précédent donne un exemple d'attribution de valeurs à ces indices de confiance intermédiaires. Ces valeurs ne sont données qu'à titre d'exemples non limitatifs.

Dans d'autres exemples de détermination du premier indice de confiance, d'autres paramètres peuvent être prise en considération, notamment la précision de la numérisation de la cartographie, la date de mise à jour de cette cartographie, ...

Un exemple de calcul du deuxième indice de confiance peut correspondre, pour une image capturée, à l'équation suivante :

$$IC2 = (\alpha_e \times C_e + \alpha_o \times C_o + \alpha_g \times C_g + \alpha_s \times C_s)/(\alpha_e + \alpha_o + \alpha_g + \alpha_s),$$

où les différents critères intervenant ont les attributions suivantes :

$C_e$ : Entropie (mesure de texture de l'image considérée) ;

$C_o$ : Facteur d'ombre sur l'image considérée ;

$C_g$ : Gradient vertical de décroissance de la lumière sur l'image considérée;

$C_s$ : Indice de symétrie de l'image considérée;

et où $\alpha_e$, $\alpha_o$, $\alpha_g$, $\alpha_s$ sont des coefficients de pondération assignés aux différents indices intermédiaires en fonction de la fiabilité de l'information et la pertinence du critère associé. Ces coefficients de pondération sont par exemple définis en faisant une étude statistique par apprentissage sur les critères.

Une fois le premier indice de confiance et le deuxième indice de confiance déterminés, on peut procéder, dans cet exemple de mise en oeuvre, à la détermination de l'ensemble d'informations final 153 en procédant à une fusion des deux premiers ensembles d'informations, et en prenant en considération leur indice de confiance respectif. Différentes possibilités sont envisagées pour réaliser la fusion.

Une première possibilité consiste, pour obtenir une valeur d'une donnée de l'ensemble d'informations final, à réaliser directement une moyenne pondérée, pour chaque type de donnée du premier et du deuxième ensemble d'information, en pondérant la valeur de la donnée considérée par l'indice de confiance de l'ensemble d'informations correspondant.

De façon plus générale, les coefficients de pondération se limitent à respecter l'ordre établi entre les indices de confiance : si le premier indice de confiance est supérieur, respectivement inférieur, au deuxième indice de confiance, alors les coefficients de pondération affectant les données du premier ensemble seront supérieurs, respectivement inférieur, aux coefficients de pondération affectant les données du deuxième ensemble, sans pour autant que les coefficients de pondération adoptent comme valeur les valeurs des indices de confiance. Dans un tel cas, les valeurs des coefficients de pondération peuvent intégrer différents critères, et notamment privilégier un des deux systèmes embarqués de détection anticipée de virages, qui s'est avéré plus fiable au fil du temps.

Dans un autre mode de réalisation, chaque indice de confiance IC1 et IC2 est comparé à une valeur seuil. Dans un tel exemple, si un des indices de confiance est inférieur à la valeur seuil à laquelle il est comparé, alors l'ensemble d'informations affecté à l'indice de confiance considéré n'est pas pris en considération pour l'établissement de l'ensemble d'informations final. On adopte ainsi un mode dégradé se basant sur un unique système de détection anticipée ; le mode dégradé reste cependant anticipatif. Si les deux indices de confiance sont inférieurs à la valeur seuil à laquelle ils sont comparés, alors on adopte un mode dégradé basé par exemple sur le capteur angle volant. Un tel mode dégradé, dont l'utilisation est fort peu probable, n'est alors plus anticipatif ;on parle alors de détection instantanée.

D'une façon générale, la détermination des indices de confiance et leur intervention dans la fusion des connaissances issues des deux systèmes dépendent de la stratégie de fusion retenue. Celle-ci peut suivre différents modèles connus, du type théorie bayésienne, théorie ensembliste par logique floue ou encore théorie de l'évidence de Dempster - Shafer. Un troisième indice de confiance IC3 est associé à l'ensemble d'informations final 153. Il permet de présenter un niveau de fiabilité des informations finales. Il est alors utilisé librement selon les exemples de réalisation :par exemple, si le troisième indice de confiance est inférieur à une valeur seuil, on prévoit de choisir l'utilisation d'un mode de fonctionnement dégradé n'utilisant pas les données de l'ensemble d'informations final. Dans un exemple de mise en oeuvre, le troisième indice de confiance est égal à la moyenne du premier indice de confiance et du deuxième indice de confiance.

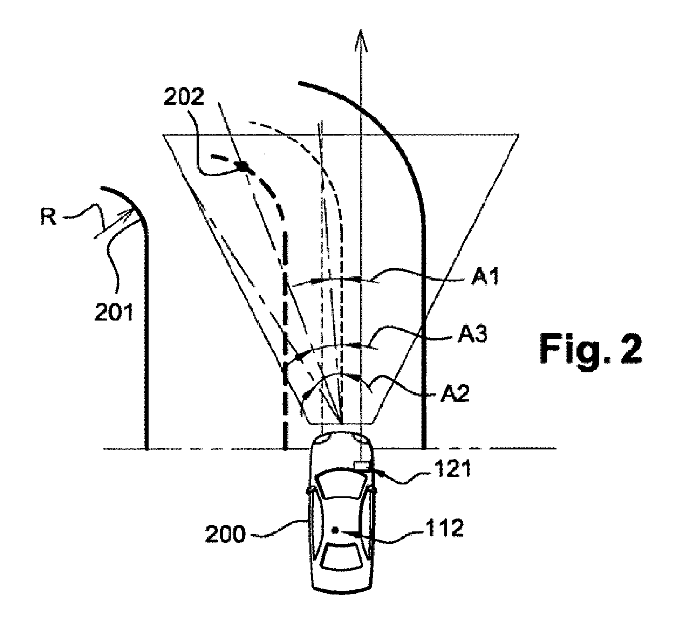

Un premier exemple d'application du procédé selon l'invention est illustré à la figure 2. Dans cet exemple, on exploite l'ensemble d'informations final 153 pour déterminer, avant même l'entrée dans un virage 201, un point d'éclairage pertinent 202 dans ledit virage, et l'évolution de ce point d'éclairage pertinent entre l'entrée dans le virage et la sortie du virage. A cet effet, on utilise essentiellement la donnée d'un rayon de courbure R présente dans le troisième ensemble d'informations, ainsi que la vitesse du véhicule.

Le premier système seul, à partir de la donnée de rayon de courbure qu'il calcule, aurait commandé une rotation des phares selon un premier angle A1. Le deuxième système seul, à partir de la donnée de rayon de courbure qu'il calcule, aurait commandé une rotation des phares selon un deuxième angle A2. La donnée de rayon de courbure après fusion des informations des deux systèmes est utilisée pour orienter de façon anticipative les phares dans les virages selon un angle A3, qui peut prendre une valeur proche de A1, proche de A2 ou une valeur comprise entre les angles A1 et A2. Cette orientation des phares, qui se traduit par une rotation ou par un allumage successif de sources lumineuses, prend également en compte l'état actuel du véhicule (vitesse, accélération, cap, ...) à partir des informations des capteurs embarqués du véhicule. Ces informations sont prises en compte dans le calcul de la rotation afin de respecter la distance pertinente (par rapport au point d'éclairage pertinent) qui est fonction de la vitesse du véhicule.

Une autre application possible du procédé selon l'invention est son utilisation comme un système d'avertissement anticipatif de virages (Dynamic Curve Warning System). En détectant le virage, et à partir de la donnée de rayon de courbure obtenue suite à la fusion des informations des deux systèmes, la vitesse maximale par laquelle on peut emprunter le virage sans risque de sous ou sur virage est calculée. Pour arriver au virage avec une vitesse ne dépassant pas cette valeur maximale, la vitesse du véhicule est vérifiée bien avant d'arriver au virage et le conducteur est alerté par l'émission d'un avertissement, par exemple sonore, lui recommandant la vitesse adaptée au virage. La distance minimale d'avertissement d entre le véhicule et l'entrée de virage peut être donnée par l'équation suivante:

$$d = \frac{\left(v - v_{rec}\right)^2}{2\gamma} + \tau v \, ,$$

où

- ν est la vitesse du véhicule ;

  ν $_{rec}$ est la vitesse recommandée calculée à partir de la donnée de rayon de courbure dans l'ensemble d'informations final ;

- γ est la décélération (par exemple 2 m.s$^{-2}$)

- τ est le temps de réaction du conducteur (par exemple 1,2 seconde).

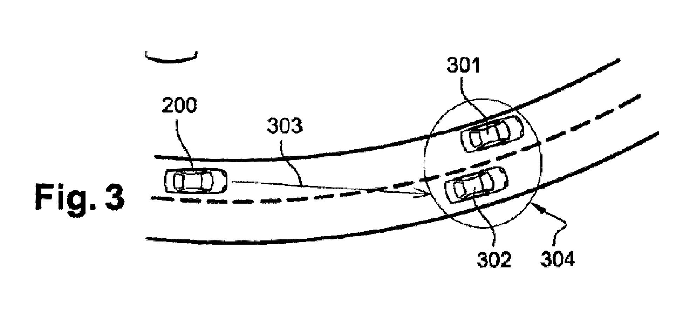

Une autre application possible, illustrée à la figure 3, est l'utilisation de l'information délivrée par le procédé selon l'invention pour l'optimisation du système de Régulateur de Vitesse Adaptatif (ACC : Adaptive Cruise Control), présent sur certains véhicules. L'ACC est un système d'aide à la conduite permettant à l'automobiliste de conduire de façon plus décontractée. Il a pour objectif d'adapter automatiquement la vitesse du véhicule 200 à celle d'un véhicule 301 qui le précède et de décharger ainsi le conducteur. Le véhicule qui précède est saisi et enregistré entre 0 et 120 mètres environ. A cet effet, un radar, ou un faisceau infrarouge 303, embarqué dans le véhicule explore l'espace devant ledit véhicule et communique, le cas échéant, la distance du véhicule qui précède ainsi que la vitesse de ce dernier.

Cependant, comme illustré à la figure 3, de fausses détections 304 de véhicule peuvent intervenir. Par fausse détection, on désigne ici la détection d'un véhicule 302 qui précède, ou d'un élément de l'infrastructure même en absence de véhicule tiers, situé devant le véhicule embarquant le système ACC, mais qui n'est pas situé sur la trajectoire du véhicule. Un tel cas de figure se produit fréquemment dans les virages.

Par conséquence, la vitesse du véhicule est diminuée en tenant compte de la distance par rapport à ce véhicule ou par rapport à l'élément de l'infrastructure détecté. Or, le véhicule qui doit être détecté est celui qui est sur la même voie. En utilisant l'information anticipative de l'existence d'un virage ainsi que la valeur de son rayon de courbure (ou rayon de virage) l'ACC peut être optimisé afin de détecter le bon véhicule.

**Revendications**

1. Procédé de détection anticipée d'un virage (201) sur une portion de route empruntée par un véhicule automobile (200) **caractérisé en ce qu'**il comporte les différentes étapes comprenant :

   - établir, au moyen d'un premier système (101), dit système de navigation faisant intervenir une antenne GPS (112) et des données de cartographie (111), un premier ensemble d'informations (151) sur le virage considéré, ledit premier ensemble d'informations étant associé à un premier indice de confiance (IC1);
   - établir, au moyen d'un deuxième système (102), dit système de traitement d'images, faisant intervenir une caméra (121) et des applications de traitement d'images (122), un deuxième ensemble d'informations (152) sur le virage considéré, ledit deuxième ensemble d'informations étant associé à un deuxième indice de confiance (IC2);
   - établir, à partir du premier ensemble d'informations et du deuxième ensemble d'informations et en prenant en considération ledit premier indice de confiance et ledit deuxième indice de confiance, un troisième ensemble d'informations (153) sur le virage considéré.

2. Procédé selon la revendication précédente **caractérisé en ce que** le troisième ensemble d'informations est associé à un troisième indice de confiance (IC3), élaboré à partir du premier indice de confiance et du deuxième indice de confiance.

3. Procédé selon l'une au moins des revendications précédentes **caractérisé en ce que** le premier ensemble d'informations et le deuxième ensemble d'informations comportent au moins une donnée parmi les suivantes : rayon de courbure du virage considéré, distance entre une position instantanée du véhicule et l'entrée du virage considéré, type de virage.

4. Procédé selon l'une au moins des revendications précédentes **caractérisé en ce que** le troisième ensemble d'informations comporte au moins une donnée parmi les suivantes : rayon de courbure (R) du virage considéré, distance entre une position instantanée du véhicule et l'entrée du virage considéré, type de virage, point d'éclairage pertinent.

5. Procédé selon l'une au moins des revendications 2 à 4 **caractérisé en ce que** le premier indice de confiance est élaboré à partir d'au moins deux paramètres d'un premier ensemble de paramètres comprenant les paramètres suivants:

   - précision du positionnement GPS ;
   - précision de la numérisation de la cartographie ;

- date de mise à jour de la cartographie ;
- type de route ;
- niveau d'information sur la route ;
- classe fonctionnelle de la route ;
- environnement du véhicule ;
- sélection d'un mode guidage par le conducteur et niveau de conformité entre un itinéraire prévu et des informations fournies par des capteurs embarqués du véhicule.

6. Procédé selon la revendication précédente **caractérisé en ce que** le premier indice de confiance est élaboré en réalisant une moyenne pondérée de valeurs affectées aux paramètres suivants, lesdits paramètres étant associés à des coefficients de pondération résultant d'une phase d'apprentissage.

7. Procédé selon l'une au moins des revendications 2 à 6 **caractérisé en ce que** le deuxième indice de confiance est élaboré à partir d'un ou plusieurs paramètres, d'un deuxième ensemble de paramètres relatifs à une image obtenue par la caméra, parmi au moins deux des paramètres suivants :

- mesure de texture de l'image considérée ;
- facteur d'ombre sur l'image considérée ;
- gradient vertical de décroissance de la lumière;
- indice de symétrie de l'image considérée.

8. Procédé selon la revendication précédente **caractérisé en ce que** le deuxième indice de confiance est élaboré en réalisant une moyenne pondérée de valeurs affectées à l'ensemble des paramètres du deuxième ensemble de paramètres, lesdits paramètres étant associés à des coefficients de pondération résultant d'une phase d'apprentissage.

9. Procédé selon l'une des revendications 2 à 8 **caractérisé en ce qu'**il comporte les étapes supplémentaires consistant à :

- comparer le premier indice de confiance à une première valeur seuil et le deuxième indice de confiance à une deuxième valeur seuil :
- dans l'établissement du troisième ensemble d'informations, considérer uniquement le(s) ensemble(s) d'informations, parmi le premier ensemble d'informations et le deuxième ensemble d'informations, dont l'indice de confiance est supérieur à la valeur seuil à laquelle il est comparé.

10. Procédé selon la revendication précédente **caractérisé en ce qu'**il comporte l'étape supplémentaire consistant à, dans le cas où le premier indice de confiance et le deuxième indice de confiance sont inférieurs aux valeurs seuils auxquelles ils sont comparés, adopter un mode de fonctionnement dégradé dans lequel la détection du virage considéré est instantané.

11. Procédé selon l'une au moins des revendications 1 à 10 **caractérisé en ce que** le troisième ensemble d'informations comprend des données, la valeur de chacune desdites données étant établie en réalisant une moyenne pondérée de données correspondantes du premier ensemble d'informations et du deuxième ensemble d'informations, une donnée du premier ensemble étant pondérée par un premier coefficient de pondération et la donnée correspondante du deuxième ensemble étant pondérée par un deuxième coefficient de pondération, le premier coefficient de pondération étant supérieur au deuxième coefficient de pondération si et seulement si le premier indice de confiance est supérieur au deuxième indice de confiance.

12. Procédé selon l'une au moins des revendications 1 à 10 **caractérisé en ce que** le premier ensemble d'informations et le second ensemble d'informations sont traités conjointement dans un système de traitement d'informations par fusion de données.

13. Procédé selon l'une au moins des revendications précédentes **caractérisé en ce que** le deuxième système met en oeuvre l'opération consistant à repérer des bordures de la portion de route considérée.

14. Procédé selon l'une au moins des revendications 1 à 11 **caractérisé en ce que** le deuxième système met en oeuvre l'opération consistant à repérer des lignes blanches sur la portion de route considérée.

**15.** Système de détection anticipée d'un virage (201) sur une portion de route mettant en oeuvre le procédé selon l'une au moins des revendications précédentes **caractérisé en ce qu'**il comporte :

- un premier système (101), dit système de navigation, faisant intervenir une antenne GPS (112), et des données de cartographie (111) pour établir un premier ensemble d'informations (151) sur le virage considéré associé à un premier indice de confiance (IC1);
- un deuxième système (102), dit système de traitement d'images, faisant intervenir une caméra (121) et des applications de traitement d'images (122), pour établir un deuxième ensemble d'informations sur le virage considéré associé à un deuxième indice de confiance (IC2);
- des moyens de traitement d'informations pour établir, à partir du premier ensemble d'informations et du deuxième ensemble d'informations et en prenant en considération le premier indice de confiance et le deuxième indice de confiance, un troisième ensemble d'informations sur le virage considéré.

**16.** Système selon la revendication précédente **caractérisé en ce que** le premier ensemble d'informations, le deuxième ensemble d'informations et le troisième ensemble d'informations comportent une donnée relative au rayon de courbure du virage considéré, ledit système étant relié à un dispositif projecteur à faisceau mobile.

**17.** Système selon la revendication précédente **caractérisé en ce que** le dispositif projecteur à faisceau mobile est un dispositif projecteur orientable.

**18.** Système selon la revendication 16 **caractérisé en ce que** le dispositif projecteur à faisceau mobile est un dispositif projecteur fixe comportant une pluralité de sources lumineuses présentant un allumage successif dépendant de la trajectoire du véhicule.

**19.** Système selon la revendication 15 **caractérisé en ce que** le premier ensemble d'informations, le deuxième ensemble d'informations et le troisième ensemble d'informations comportent une donnée relative au rayon de courbure du virage considéré, ledit système étant relié à un système de régulateur de vitesse adaptatif utilisant la donnée relative au rayon de courbure comme paramètre de fonctionnement.

**20.** Système selon la revendication 15 **caractérisé en ce que** le premier ensemble d'informations, le deuxième ensemble d'informations et le troisième ensemble d'informations comportent notamment une donnée relative au rayon de courbure du virage considéré, ledit système étant relié à un système d'avertissement de dépassement d'une vitesse conseillée pour limiter la vitesse du véhicule à une valeur limite fonction notamment du rayon de courbure du virage considéré.

**Patentansprüche**

**1.** Verfahren zum antizipierten Erkennen einer Kurve (201) auf einem von einem Kraftfahrzeug (200) befahrenen Straßenabschnitt,
**dadurch gekennzeichnet, dass** es die unterschiedlichen Schritte umfasst, bestehend aus:

- Erstellen eines ersten Informationssatzes (151) zu der betreffenden Kurve mittels eines als Navigationssystem bezeichneten ersten Systems (101), das eine GPS-Antenne (112) und Kartendaten (111) verwendet, wobei der erste Informationssatz einem ersten Verlässlichkeitsindex (IC1) zugeordnet ist;
- Erstellen eines zweiten Informationssatzes (152) zu der betreffenden Kurve mittels eines als Bildverarbeitungssystem bezeichneten zweiten Systems (102), das eine Kamera (121) und Bildverarbeitungsfunktionen (122) verwendet, wobei der zweite Informationssatz einem zweiten Verlässlichkeitsindex (IC2) zugeordnet ist;
- Erstellen eines dritten Informationssatzes (153) zu der betreffenden Kurve anhand des ersten Informationssatzes und des zweiten Informationssatzes und unter Berücksichtigung des ersten Verlässlichkeitsindex und des zweiten Verlässlichkeitsindex.

**2.** Verfahren nach dem vorhergehenden Anspruch,
**dadurch gekennzeichnet, dass** der dritte Informationssatz einem dritten Verlässlichkeitsindex (IC3) zugeordnet ist, der anhand des ersten Verlässlichkeitsindex und des zweiten Verlässlichkeitsindex ermittelt wird.

**3.** Verfahren nach wenigstens einem der vorhergehenden Ansprüche,
**dadurch gekennzeichnet, dass** der erste Informationssatz und der zweite Informationssatz wenigstens eine Angabe aus folgenden enthalten: Krümmungsradius der betreffenden Kurve, Entfernung zwischen einer Momentanposition des Fahrzeugs und dem Eingang der betreffenden Kurve, Art der Kurve.

4. Verfahren nach wenigstens einem der vorhergehenden Ansprüche,
**dadurch gekennzeichnet, dass** der dritte Informationssatz wenigstens eine Angabe aus folgenden enthält: Krümmungsradius (R) der betreffenden Kurve, Entfernung zwischen einer Momentanposition des Fahrzeugs und dem Eingang der betreffenden Kurve, Art der Kurve, geeigneter Beleuchtungspunkt.

5. Verfahren nach wenigstens einem der Ansprüche 2 bis 4,
**dadurch gekennzeichnet, dass** der erste Verlässlichkeitsindex anhand von wenigstens zwei Parametern eines ersten Parametersatzes ermittelt wird, der die folgenden Parameter umfasst:

- Ortsgenauigkeit des GPS;
- Genauigkeit der Digitalisierung der Karte;
- Datum der Aktualisierung der Karte;
- Straßenart;
- Straßeninformationsgrad;
- Straßenordnungsklasse;
- Fahrzeugumfeld;
- Wahl eines Leitmodus durch den Fahrer und Konformitätsgrad zwischen einer vorgesehenen Fahrstrecke und den durch die fahrzeugeigenen Sensoren gelieferten Informationen.

6. Verfahren nach dem vorhergehenden Anspruch,
**dadurch gekennzeichnet, dass** der erste Verlässlichkeitsindex durch Erzeugen eines gewichteten Mittelwertes aus Werten ermittelt wird, die von folgenden Parametern betroffen sind, wobei die Parameter Gewichtungskoeffizienten zugeordnet sind, die aus einer Lernphase resultieren.

7. Verfahren nach wenigstens einem der Ansprüche 2 bis 6,
**dadurch gekennzeichnet, dass** der zweite Verlässlichkeitsindex ausgehend von einem oder mehreren Parametern eines zweiten Parametersatzes ermittelt wird, die ein durch die Kamera erhaltenes Bild betreffen, darunter wenigstens zwei der folgenden Parameter:

- Messen der Beschaffenheit des betreffenden Bildes;
- Schattengrad auf dem betreffenden Bild;
- vertikaler Lichtabnahmegradient;
- Symmetrieindex des betreffenden Bildes.

8. Verfahren nach dem vorhergehenden Anspruch,
**dadurch gekennzeichnet, dass** der zweite Verlässlichkeitsindex durch Erzeugen eines gewichteten Mittelwertes aus Werten ermittelt wird, die von allen Parametern des zweiten Parametersatzes betroffen sind, wobei die Parameter Gewichtungskoeffizienten zugeordnet sind, die aus einer Lernphase resultieren.

9. Verfahren nach einem der Ansprüche 2 bis 8,
**dadurch gekennzeichnet, dass** es die folgenden zusätzlichen Schritte umfasst:

- Vergleichen des ersten Verlässlichkeitsindex mit einem ersten Schwellenwert und des zweiten Verlässlichkeitsindex mit einem zweiten Schwellenwert;
- bei der Erstellung des dritten Informationssatzes, Berücksichtigen nur des Informationssatzes bzw. der Informationssätze aus dem ersten Informationssatz und dem zweiten Informationssatz, dessen bzw. deren Verlässlichkeitsindex grôßer ist als der Schwellenwert, mit dem dieser verglichen wird.

10. Verfahren nach dem vorhergehenden Anspruch,
**dadurch gekennzeichnet, dass** es den zusätzlichen Schritt umfasst, einen ausfallsicheren Betriebsmodus einzunehmen, in dem das Erkennen der betreffenden Kurve unmittelbar erfolgt, wenn der erste Verlässlichkeitsindex und der zweite Verlässlichkeitsindex kleiner sind als die Schwellenwerte, mit denen sie verglichen werden.

11. Verfahren nach wenigstens einem der Ansprüche 1 bis 10,
**dadurch gekennzeichnet, dass** der dritte Informationssatz Angaben umfasst, deren Wert jeweils durch Erzeugen eines Mittelwertes aus entsprechenden Angaben des ersten Informationssatzes und des zweiten Informationssatzes ermittelt wird, wobei eine Angabe des ersten Satzes durch einen ersten Gewichtungskoeffizienten gewichtet wird und die entsprechende Angabe des zweiten Satzes durch einen zweiten Gewichtungskoeffizienten gewichtet wird, wobei der erste Gewichtungskoeffizient größer ist als der zweite Gewichtungskoeffizient, wenn und nur wenn der erste Verlässlichkeitsindex größer ist als der zweite Verlässlichkeitsindex.

12. Verfahren nach wenigstens einem der Ansprüche 1 bis 10,
**dadurch gekennzeichnet, dass** der erste Informationssatz und der zweite Informationssatz gemeinsam in einem Informationsverarbeitungssystem durch Datenverknüpfung verarbeitet werden.

13. Verfahren nach wenigstens einem der vorhergehenden Ansprüche,
**dadurch gekennzeichnet, dass** das zweite System den Schritt zum Ermitteln der Ränder des betreffenden Straßenabschnitts durchführt.

14. Verfahren nach wenigstens einem der Ansprüche 1 bis 11,
**dadurch gekennzeichnet, dass** das zweite System den Schritt zum Ermitteln der Fahrspurmarkierung auf dem betreffenden Straßenabschnitt durchführt.

15. System zum antizipierten Erkennen einer Kurve (201) auf einem Straßenabschnitt, das das Verfahren nach wenigstens einem der vorhergehenden Ansprüche anwendet,
**dadurch gekennzeichnet, dass** es umfasst:

- ein als Navigationssystem bezeichnetes erstes System (101), das eine GPS-Antenne (112) und Kartendaten (111) verwendet, zum Erstellen eines ersten Informationssatzes (151) zu der betreffenden Kurve, der einem ersten Verlässlichkeitsindex (IC1) zugeordnet ist;
- ein als Bildverarbeitungssystem bezeichnetes zweites System (102), das eine Kamera (121) und Bildverarbeitungsfunktionen (122) verwendet, zum Erstellen eines zweiten Informationssatzes zu der betreffenden Kurve, der einem zweiten Verlässlichkeitsindex (IC2) zugeordnet ist;
- Mittel zur Informationsverarbeitung zum Erstellen eines dritten Informationssatzes zu der betreffenden Kurve anhand des ersten Informationssatzes und des zweiten Informationssatzes und unter Berücksichtigung des ersten Verlässlichkeitsindex und des zweiten Verlässlichkeitsindex.

16. System nach dem vorhergehenden Anspruch,
**dadurch gekennzeichnet, dass** der erste Informationssatz, der zweite Informationssatz und der dritte Informationssatz eine Angabe zum Krümmungsradius der betreffenden Kurve umfassen, wobei das System mit einem beweglichen Scheinwerfer verbunden ist.

17. System nach dem vorhergehenden Anspruch,
**dadurch gekennzeichnet, dass** der bewegliche Scheinwerfer ein schwenkbarer Scheinwerfer ist.

18. System nach Anspruch 16,
**dadurch gekennzeichnet, dass** der bewegliche Scheinwerfer ein ortsfester Scheinwerfer ist, mit einer Vielzahl von Lichtquellen, die abhängig vom Fahrweg des Fahrzeugs nacheinander eingeschaltet werden.

19. System nach Anspruch 15,
**dadurch gekennzeichnet, dass** der erste Informationssatz, der zweite Informationssatz und der dritte Informationssatz eine Angabe zum Krümmungsradius der betreffenden Kurve umfassen, wobei das System mit einem adaptiven Geschwindigkeitsreglersystem verbunden ist, das die Angabe zum Krümmungsradius als Betriebsparameter nutzt.

20. System nach Anspruch 15,
**dadurch gekennzeichnet, dass** der erste Informationssatz, der zweite Informationssatz und der dritte Informationssatz insbesondere eine Angabe zum Krümmungsradius der betreffenden Kurve umfassen, wobei das System mit einem Warnsystem bei Überschreiten einer empfohlenen Geschwindigkeit verbunden ist, um die Geschwindigkeit des Fahrzeugs auf einen insbesondere vom Krümmungsradius der betreffenden Kurve abhängigen Grenzwert zu beschränken.

**Claims**

1. Method for the early detection of a bend (201) in a section of road being travelled by a motor vehicle (200), **characterized in that** it comprises differents stages including:

   - establishment, by means of a first system (101) known as the navigation system, which utilizes a GPS antenna (112) and a cartographic database (111), of a first information set (151) relating to the bend in question, the said first information set being associated with a first confidence index (IC1);
   - establishment, by means of a second system (102) known as the image processing system, which utilizes a camera (121) and image processing applications (122), of a second information set (152) relating to the bend in question, the said second information set being associated with a second confidence index (IC2);
   - establishment, on the basis of the first information set and of the second information set, taking into consideration the said first confidence index and the said second confidence index, of a third information set (153) relating to the bend in question.

2. Method in accordance with the preceding Claim, **characterized in that** the third information set is associated with a third confidence index (IC3), formulated on the basis of the first confidence index and of the second confidence index.

3. Method in accordance with at least one of the preceding Claims, **characterized in that** the first information set and the second information set include at least one piece of data from among the following: the radius of curvature of the bend in question, the distance between an instantaneous position of the vehicle and the entrance to the bend in question, and the type of bend involved.

4. Method in accordance with at least one of the preceding Claims, **characterized in that** the third information set includes at least one piece of data from among the following: the radius of curvature (R) of the bend in question, the distance between an instantaneous position of the vehicle and the entrance to the bend in question, the type of bend involved, and the relevant light point.

5. Method in accordance with at least one of Claims 2 to 4, **characterized in that** the first confidence index is formulated on the basis of at least two parameters from a first set of parameters comprising the following:

   - precision of GPS positioning;
   - precision of cartographic digitizing;
   - date of updating of cartographic database;
   - type of road involved;
   - level of information on the road;
   - functional class of the road;
   - vehicle environment;
   - selection of a guidance mode by the driver, and the degree of conformity between a planned itinerary and information provided by the vehicle's on-board sensors.

6. Method in accordance with the preceding Claim, **characterized in that** the first confidence index is formulated by working out a weighted mean of values assigned to the following parameters, the said parameters being associated with weighting coefficients resulting from a learning process.

7. Method in accordance with at least one of Claims 2 to 6, **characterized in that** the second confidence index is formulated on the basis of one or more parameters from a second set of parameters relating to an image obtained by the camera, comprising at least two of the following parameters:

   - measurement of the texture of the image in question;
   - shading factor affecting the image in question;
   - vertical gradient of the decrease in light;
   - symmetry index of the image in question.

8. Method in accordance with the preceding Claim, **characterized in that** the second confidence index is formulated by working out a weighted mean of values assigned to all of the parameters in the second set of parameters, the said parameters being associated with weighting coefficients resulting from a learning process.

9. Method in accordance with one of Claims 2 to 8, **characterized in that** it includes supplementary steps which consist in:

- comparison of the first confidence index with a first threshold value and comparison of the second confidence index with a second threshold value;
- for establishment of the third information set, exclusive consideration of that(those) information set(s), out of the first information set and second information set, the confidence index of which is higher than the threshold value with which it is compared.

10. Method in accordance with the preceding Claim, **characterized in that** it includes a supplementary stage consisting, in cases where the first confidence index and the second confidence index are lower than the threshold values with which they are compared, in the adoption of a fail-soft operating mode in which detection of the bend in question is instantaneous.

11. Method in accordance with at least one of Claims 1 to 10, **characterized in that** the third information set comprises data, the value of each piece of which data being established by working out a weighted mean of corresponding data from the first information set and from the second information set, a piece of data from the first set being weighted by a first weighting coefficient and the corresponding piece of data from the second set being weighted by a second weighting coefficient, the first weighting coefficient being greater than the second weighting coefficient, if, and only if, the first confidence index is greater than the second confidence index.

12. Method in accordance with at least one of Claims 1 to 10, **characterized in that** the first information set and the second information set are processed jointly in an information processing system by means of data fusion.

13. Method in accordance with at least one of the preceding Claims, **characterized in that** the second system initiates the operation consisting in location of the edges of the section of road in question.

14. Method in accordance with at least one of Claims 1 to 11, **characterized in that** the second system initiates the operation consisting in location of the white lines on the section of road in question.

15. System for early detection of a bend (201) on a section of road involving the method in accordance with at least one of the preceding Claims, **characterized in that** it comprises:

- a first system (101), known as the navigation system, utilizing a GPS antenna (112) and a cartographic database (111) in order to establish a first information set (151) relating to the bend in question which is associated with a first confidence index (IC1);
- a second system (102), known as the image processing system, utilizing a camera (121) and image processing applications (122) in order to establish a second information set relating to the bend in question which is associated with a second confidence index (IC2);
- an information processing means for the purpose of establishing, on the basis of the first information set and of the second information set and also taking into consideration the first confidence index and the second confidence index, a third information set relating to the bend in question.

16. System in accordance with the preceding Claim, **characterized in that** the first information set, the second information set and the third information set include a piece of data relating to the radius of curvature of the bend in question, the said system being connected to a moving beam headlight device.

17. System in accordance with the preceding Claim, **characterized in that** the moving beam headlight device is a rotatable headlight device.

18. System in accordance with Claim 16, **characterized in that** the moving beam headlight device is a fixed headlight device comprising a plurality of light sources providing successive illumination depending upon the trajectory of the vehicle.

19. System in accordance with Claim 15, **characterized in that** the first information set, the second information set and the third information set include a piece of data relating to the radius of curvature of the bend in question, the said system being connected to an adjustable system of speed regulation which utilizes the piece of data relating to the radius of curvature as an operating parameter.

20. System in accordance with Claim 15, **characterized in that** the first information set, the second information set and the third information set comprise in particular a piece of data relating to the radius of curvature of the bend in question, the said system being connected to a warning system which indicates when an advised speed has been exceeded, with a view to restricting the speed of the vehicle to a limit value which is a function in particular of the radius of curvature of the bend in question.

**151** **153**

**101**

On-board sensors:

Speed, gyroscope

**113**

GPS
antenna

**112**

Cartographic
database

**111**

Navigation
system

Curvature, distance,
type of bend

Curvature,
relevant light
point. Distance,
type of bend,
....fused data

Data
fusion
system

IC1

**152**

Curvature, distance,
type of bend

System based on
image processing
applications

Camera

**121**

IC2

IC3

**122**

Image
processing

**Fig. 1**

**102**

**154**

Fig. 2

Fig. 3

## RÉFÉRENCES CITÉES DANS LA DESCRIPTION

### Documents brevets cités dans la description

- EP 780823 A
- EP 887229 A
- EP 1415856 A
- EP 1431918 A